# EUROPEAN PATENT SPECIFICATION

(11) **EP 4 273 009 B1**
(45) Date of publication and mention of the grant of the patent: **21.05.2025**
(21) Application number: 22171191.4
(22) Date of filing: 02.05.2022
(51) Int. Cl.: B60W 30/14, B60W 50/10

(54) **A METHOD FOR OF ACTIVATING CRUISE CONTROL FOR A VEHICLE IN MOTION**
VERFAHREN ZUM AKTIVIEREN DER GESCHWINDIGKEITSREGELUNG FÜR EIN FAHRZEUG IN BEWEGUNG
PROCÉDÉ D'ACTIVATION DE RÉGULATEUR DE VITESSE D'UN VÉHICULE EN MOUVEMENT

(43) Date of publication of application: 08.11.2023
(73) Proprietor: VOLVO TRUCK CORPORATION, 405 08 Göteborg (SE)
(72) Inventor: CHAVRIER, Philemon, 38230 Tignieu Jameyzieu (FR); LAPERRIERE, Renaud, 69006 Lyon (FR)
(74) Representative: Zacco Sweden AB

(56) References cited:
- WO-A1-2008/094111
- WO-A1-2012/085611
- DE-A1- 102015 116 479
- US-A1- 2018 093 677

## Description

### TECHNICAL FIELD

The present invention relates to a method of activating cruise control for a vehicle in motion. The present invention also relates to a computer program, a computer readable medium and a control unit configured to perform the steps of the method. The invention further relates to a vehicle comprising such a control unit.

The teachings of the present disclosure can be applied in heavy-duty vehicles, such as trucks, buses and construction equipment. Although the present disclosure will mainly focus on heavy-duty vehicles, the general inventive concept is not restricted to this particular vehicle, but may also be used in other vehicles such as car. In fact, the general inventive concept may also be applied to other vehicles which are not land-bound, such as boats.

### BACKGROUND

Fuel consumption is the first cost centre for transport solutions. Hence, the reduction of the fuel consumption is an important goal within the transport industry. One solution to optimize the consumption is to have a smooth driving with small speed variation. For a heavy-duty vehicle, when a driver tries to keep a steady speed, he/she will in practice continuously do corrections with the acceleration pedal. The provision of cruise control has shown a great improvement in driving regularity and fuel consumption. A driver can conveniently activate the cruise control and the vehicle will keep a steady speed until the cruise control is deactivated. Nevertheless, there still remains room for improvement.

DE102015116479A1 discloses a method of activating cruise control for a vehicle in motion, comprising:
- continuously acquiring measurements of the speed of the vehicle,
- selecting a time range of T units of time, such as T seconds,
- continuously calculating the average speed of the vehicle, wherein said calculated average speed is, at any given moment, based on the continuously acquired speed measurements for the most recent T units of time and
- automatically activating the cruise control to operate the vehicle at said last calculated average speed.

### SUMMARY

An object of the present invention is to provide a method of cruise control which may reduce fuel consumption. This and other objects which will become apparent in the following are accomplished by the accompanying independent claim. Some non-limiting exemplary embodiments are presented in the dependent claims.

The inventors of the general inventive concept have realized that by detecting that a driver is currently intending to keep a steady speed, the cruise control may suitably be automatically activated. In particular, this may be relevant for relatively high speeds outside of town centres, such as on country roads or highways where a relative smooth traffic flow with few speed variations may be expected. By constantly measuring the average speed over a certain passed time period, and detecting that the average speed has no or only a small variation, the cruise control may suitably be automatically activated if the average speed is above a predetermined minimum value. Such a minimum value may suitably be set based on the maximum allowable speed on the path currently travelled by the vehicle. This realization and different variations thereof will now be discussed in more detail below.

According to a first aspect of the present invention, there is provided a method of activating cruise control for a vehicle in motion, comprising:
- continuously acquiring measurements of the speed of the vehicle,
- determining a maximum allowable speed on the path currently travelled by the vehicle,
- selecting a value V1 for a limit speed based on the determined maximum allowable speed, said value V1 being lower than the maximum allowable speed,
- selecting a time range of T units of time, such as T seconds, wherein the value of T is selected based on the maximum allowable speed,
- continuously calculating the average speed of the vehicle, wherein said calculated average speed is, at any given moment, based on the continuously acquired speed measurements for the most recent T units of time,
- upon determination that the speed of the vehicle exceeds the value V1 and that during the most recent T units of time the speed has deviated less than or equal to a predefined allowable deviation from the last calculated average speed, automatically activating the cruise control to operate the vehicle at said last calculated average speed.

By taking into account the maximum allowable speed on the path currently travelled by the vehicle, a reasonable limit speed may be selected for determining whether or not to activate the cruise control. For instance, if there is slow traffic due to jam or road work, etc. there is no risk for the cruise control becoming activated even though the driver happens to keep a substantially steady pace for a while. Rather when it is determined that a normal cruising speed has been reached and the driver is trying to keep that speed, then the cruise control can be activated.

As stated above, the time range of T units of time is selected based on the maximum allowable speed. This is advantageous as different time ranges may be appropriate for different maximum speeds. For instance, at roads with relatively high allowable maximum speed, such as 90 km/h, then the time range may be relatively short (for example 10 seconds), while for road with relatively lower maximum allowable speeds the time range may be longer (for example, 30 seconds for a 70 km/ h road). Thus, different time windows may be applied to determine if a driver is trying to keep a substantially steady speed. It should be understood that said time range of T units of time can also be selected based on the selected limit speed value V1, however, that would still indirectly be a selection based on the maximum allowable speed, since V1, in its turn, is selected based on the maximum allowable speed.

The limit speed V1 may suitably be determined based on empirical studies of desirable cruising speeds under different conditions. For example, if the maximum allowable speed for the road is 90 km/h the limit speed value V1 may be selected to be 80 km/h.

The allowable deviation may also be determined based on empirical studies. For example, the allowable deviation may be ± 3% of the average speed.

It should be understood that the numerical values presented in this disclosure are merely given as examples and are in no way the only possible numerical values. On the contrary, it should be understood that the other numerical values may be suitably selected depending on different conditions, such as type of vehicle, driver preferences, vehicle owner preferences, vehicle load, etc.

It should be noted that the method may suitably be implemented for other types of vehicles than land-based vehicles. In principle, the method may be implemented for air or water-based vehicles as well. For instance, the vehicle may be a boat travelling along a channel or other area having a maximum allowable speed. Nevertheless, in this disclosure the main focus will be with respect to land-based vehicles, and in particular heavy-duty vehicles.

It should furthermore be noted that although the background section discussed the desirability to reduce fuel consumption, the general inventive concept may be implemented for vehicles having various kinds of propulsion systems. For instance, the method may be implemented for vehicles having internal combustion engines, electric vehicles, hybrids, fuel cell electric vehicles, etc.

The method according to the present invention may suitably be a computer-implemented method. Suitably, the implementation may be embodied in a control unit, which will be discussed in more detail below.

The control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where it includes a programmable device such as the microprocessor, microcontroller or programmable digital signal processor mentioned above, the processor may further include computer executable code that controls operation of the programmable device.

The control unit may suitably continuously receive speed signals from a speed senor.

Furthermore, the control unit may be configured to detect the maximum allowable speed, for example by means of a vehicle camera (reading road signs) or by a navigation system (e.g. GPS) of the vehicle. Based on the input received by the control unit it can calculate the average speed and determine the deviation therefrom. Finally, when the control unit determines that the criteria of the method have been met, it may activate the cruise control mode of the vehicle.

According to at least one exemplary embodiment, a further criterion for said step of automatically activating the cruise control is that the speed of the vehicle during said most recent T units of time has remained higher than or equal to said value V1. Thus, if the driver allows the speed of the vehicle to drop below said value V1, the average speed calculation may be restarted with a new fresh time range when the vehicle once again reaches a speed above the value V1. Of course, the driver may still be allowed to manually activate the cruise control at any speed, regardless of the speed being below or above the value V1. In other exemplary embodiments, the vehicle speed may be allowed to drop below the value V1 as long as the average speed is over the value V1. Thus, even though the speed temporarily dropped below V1during the most recent T units of time, the control unit may still activate the cruise control to operate at the last calculated average speed (assuming said average speed is above V1, and the speed deviated no more than the maximum allowable deviation).

As explained above, the values V1 and T may be adapted to the maximum allowable speed for the path currently travelled by the vehicle. This is at least partly reflected in the following exemplary embodiments.

Thus, according to at least one exemplary embodiment, when a section of the path travelled by the vehicle is reached where the maximum allowable speed is different from the previous maximum allowable speed, the method further comprises:
- lowering the value V1 for said limit speed if the new maximum allowable speed is lower than the previous maximum allowable speed,
- raising the value V1 for said limit speed if the new maximum allowable speed is higher than the previous maximum allowable speed.

This is advantageous as the automatic cruise control functionality may continuously be updated as the vehicle travels through different speed zones. The control unit may, e.g. retrieve the new value V1 from a look-up table or an electronic memory, when it received input about the new maximum allowable speed. If the new maximum allowable speed is lower than the previous allowable speed, and the vehicle is already in the automatic cruise control mode, then the control unit may suitably automatically reduce the speed of the vehicle to a lower cruise control speed which is below the new maximum allowable speed.

Similarly, according to at least one exemplary embodiment, when a section of the path travelled by the vehicle is reached where the maximum allowable speed is different from the previous maximum allowable speed, the method further comprises:
- reducing the value T if the new maximum allowable speed is higher than the previous maximum allowable speed,
- increasing the value T if the new maximum allowable speed is lower than the previous maximum allowable speed.

This is advantageous as the fuel consumption is higher at higher speeds than lower speeds, and therefore it may be desirable to activate cruise control at an earlier stage at higher speeds.

Suitably, the control unit may also activate the cruise control when a sufficiently high speed has reached (close to the maximum allowable speed) even though the driver has not kept a steady speed. This is at least partly reflected in the following exemplary embodiment.

Thus, according to at least one exemplary embodiment, the method comprises
- selecting a value V2 for an automatic activation speed based on the determined maximum allowable speed, wherein the value V2 is higher than the value V1 but lower than or equal to the maximum allowable speed, and
- upon determination that the speed of the vehicle has reached said value V2, automatically activating the cruise control to operate the vehicle at said speed V2.

By automatically activating the cruise control at a speed above V1 but below the maximum allowable speed, the driver is given the opportunity to find his/her desired cruising speed (above V1) while avoiding the risk of driving above the legal limit.

In an alternative exemplary embodiment, rather than setting V2 as a hard limit for activating the cruise control, it may be a soft limit, which allows the driver to accelerate up to the maximum allowable speed on the path. For example, if the maximum allowable speed is 90 km/h and V2 is 85 km/h, the driver may press the pedal so that the vehicle reaches, say e.g. 87 km/ h, before easing the pressure on the pedal, whereby the cruise control may be automatically activated at 87 km/h. This is reflected in at least the below exemplary embodiment, according to which the method comprises:
- selecting a value V2 for an automatic activation speed based on the determined maximum allowable speed, wherein the value V2 is higher than the value V1 but lower than or equal to the maximum allowable speed, and
- upon receipt of an acceleration request up to a speed above the value V2 but no higher than the maximum allowable speed, automatically activating the cruise control to operate the vehicle at said speed above the value V2.

Hereby, the driver is allowed to conveniently select a cruise control speed near the maximum allowable speed without needing to keep a steady speed first. Suitably, if the driver presses the vehicle up to the maximum allowable speed, that maximum allowable speed will automatically be set as the cruise control speed.

Similarly to the adjustability of V1 and T, the value V2 may also be adjustable depending on the maximum allowable speed. Thus, according to at least one exemplary embodiment, when a section of the path travelled by the vehicle is reached where the maximum allowable speed is different from the previous maximum allowable speed, the method further comprises:
- lowering the value V2 for said automatic activation speed if the new maximum allowable speed is lower than the previous maximum allowable speed,
- raising the value V2 for said automatic activation speed if the new maximum allowable speed is higher than the previous maximum allowable speed.

According to at least one exemplary embodiment, said predefined allowable deviation is defined as a percentage of the calculated average speed, such as the calculated average speed ±x%, where x is a positive number, such as 0 < x < 10.0, suitably 1.0 < x < 6.0, for example 2.0 < x < 4.0. The allowable deviation may suitably be defined based on testing, drivers' feeling, etc.

According to at least one exemplary embodiment, the method comprises, when the cruise control is activated and the speed of the vehicle is at least equal to V1:
- receiving from an accelerator pedal sensor a propulsion signal representative of a request for 0-100% of full load, wherein the method further comprises:
- ignoring a propulsion signal representative of a request for less than 100% of full load,
- deactivating the cruise control upon receipt of propulsion signal representative of a request for 100% of full load.

This may be advantageous, at for example a take-over scenario, in which a rapid acceleration may be desirable. Thus, when the vehicle is in cruise control mode and the driver fully depresses the accelerator pedal, the cruise control may suitably be deactivated to allow the driver to temporarily increase the speed.

According to at least one exemplary embodiment, the method further comprises, when cruise control is activated:
- upon receipt of a driver-initiated request for changing the current cruise control speed to a requested cruise control speed which is equal to or below the maximum allowable speed, changing the current cruise control speed to said requested cruise control speed. This is advantageous as it allows the driver to modify the cruise control speed to a desired value within the legal limit. Such modification may suitably be accomplished by the driver with a standard manual cruise control interface in the cabin of the vehicle. Thus, it should be understood that the vehicle may suitably be settable in cruise control mode both through the automatic procedure disclosed herein and through normal standard manual activation of cruise control.

According to at least one exemplary embodiment, the method further comprises, in connection with the automatic activation of the cruise control:
- sending an alert signal to a user interface for notifying the driver that the cruise control has been activated.

This is advantageous as it makes the driver aware of the fact that the cruise control has been automatically activated. The notification to the driver may be in the form of a sound signal and/or a visual notification (such as a pop-up display). Another possibility is a tactile notification, such as via the steering wheel or the acceleration pedal.

As mentioned previously, the method may suitably be implemented by means of a control unit which receives input from various component or system parts. This is at least partly reflected in the following exemplary embodiments.

According to at least one exemplary embodiment, the step of continuously acquiring measurements of the speed of the vehicle comprises receiving speed signals from a speed sensor of the vehicle.

According to at least one exemplary embodiment, said step of determining the maximum allowable speed comprises:
- receiving from a camera of the vehicle an image of a road sign, and determining the maximum allowable speed based on the received image, and/or
- receiving information of the maximum allowable speed from a navigation system of the vehicle.

According to a second aspect of the present invention, there is provided a computer program comprising program code means for performing the steps of the method according to the first aspect, including any embodiment thereof. The advantages of the computer program of the second aspect are largely analogous to the advantages of the method of the first aspect, including any embodiment thereof.

According to a third aspect of the present invention, there is provided a computer readable medium carrying a computer program comprising program code means for performing the steps of the method according to the first aspect, including any embodiment thereof, when said program product is run on a computer. The advantages of the computer readable medium of the third aspect are largely analogous to the advantages of the method of the first aspect, including any embodiment thereof.

According to a fourth aspect of the present invention, there is provided a control unit for controlling cruise control for a vehicle in motion, the control unit being configured to perform the steps of the method according to the first aspect, including any embodiment thereof. The advantages of the control unit of the fourth aspect are largely analogous to the advantages of the method of the first aspect, including any embodiment thereof.

According to a fifth aspect of the present disclosure, there is provided a vehicle, such as a heavy-duty vehicle, comprising a control unit according to the fourth aspect. The advantages of the vehicle of the fifth aspect are largely analogous to the advantages of the control unit of the fourth aspect and the method of the first aspect, including any embodiment thereof.

Generally, all terms used in the claims are to be interpreted according to their ordinary meaning in the technical field, unless explicitly defined otherwise herein. All references to "a/an/the part, element, apparatus, component, arrangement, device, means, step, etc." are to be interpreted openly as referring to at least one instance of the part, element, apparatus, component, arrangement, device, means, step, etc., unless explicitly stated otherwise. The steps of any method disclosed herein do not have to be performed in the exact order disclosed, unless explicitly stated. Further features of, and advantages with, the present inventive concept will become apparent when studying the appended claims and the following description. The skilled person realizes that different features of the present inventive concept may be combined to create embodiments other than those described in the following, without departing from the scope of the present inventive concept.

### BRIEF DESCRIPTION OF THE DRAWINGS

With reference to the appended drawings, below follows a more detailed description of embodiments of the invention cited as examples.

In the drawings:
Fig. 1 illustrates a vehicle according to at least one exemplary embodiment for which the method of the present invention may be implemented.
Fig. 2 illustrates schematically an example of some components that may be used for implementing the method of the present invention, in accordance with at least one exemplary embodiment.
Fig. 3 is a graph which schematically illustrates the implementation of the method of the present invention according to at least one exemplary embodiment.
Fig. 4 is a graph which schematically illustrates the implementation of the method of the present invention according to at least another exemplary embodiment.
Fig. 5 schematically illustrates steps of a method of the present invention, in accordance with at least one exemplary embodiment.
Fig. 6 schematically illustrates some optional additional steps, in accordance with at least some other exemplary embodiments.
Fig. 7 illustrates schematically a control unit according to at least one exemplary embodiment of the present invention.
Fig. 8 illustrates schematically a computer program product according to at least one exemplary embodiment of the present invention.

### DETAILED DESCRIPTION OF EXAMPLE EMBODIMENTS OF THE INVENTION

The invention will now be described more fully hereinafter with reference to the accompanying drawings, in which certain aspects of the invention are shown. The invention may, however, be embodied in many different forms and should not be construed as limited to the embodiments and aspects set forth herein; rather, the embodiments are provided by way of example so that this disclosure will be thorough and complete, and will fully convey the scope of the invention to those skilled in the art. Accordingly, it is to be understood that the present invention is not limited to the embodiments described herein and illustrated in the drawings; rather, the skilled person will recognize that many changes and modifications may be made within the scope of the appended claims. Like reference numerals refer to like elements throughout the description.

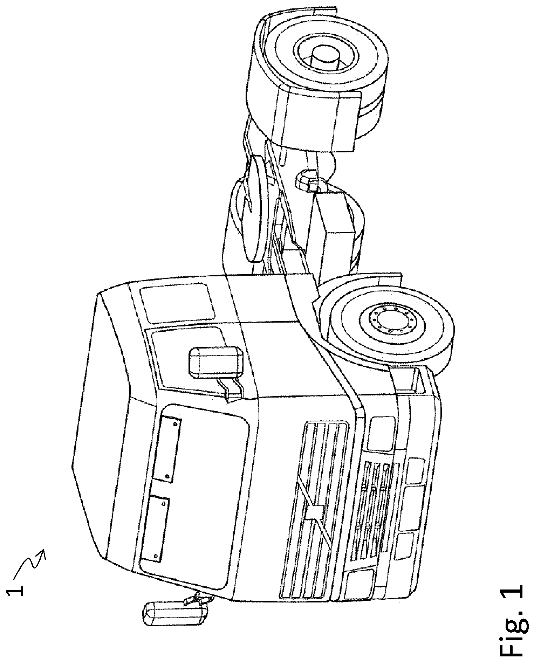

Fig. 1 illustrates a vehicle 1 according to at least one exemplary embodiment, for which the method of the present invention may be implemented. In this example, the vehicle 1 is a heavy-duty vehicle in the form of a tractor unit. However, the teachings of the present invention may also be implemented in other types of vehicles for which an automatic cruise control functionality may be desirable.

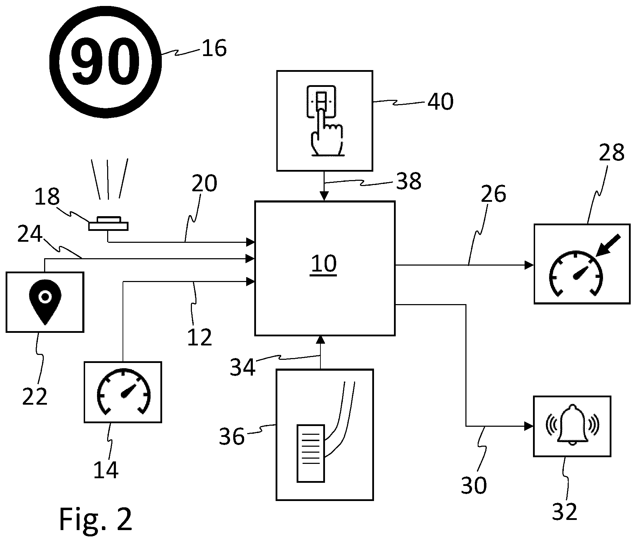

Fig. 2 illustrates schematically an example of some components that may be used for implementing the method of the present invention, in accordance with at least one exemplary embodiment. In particular, a control unit 10 may be used for implementing the method of this invention, and the various exemplary embodiments disclosed herein and also other exemplary embodiments. As such, the method of the present invention may be a computer-implemented method performed by the control unit 10.

The control unit 10 may receive a speed signal 12 from a speed senor 14. The speed signal 12 thus contains information about the current speed of the vehicle (such as the vehicle 1 in Fig. 1). The control unit 10 can store the information and use it for subsequent calculations. The control unit 10 may also receive input on the maximum allowable speed for the path (i.e. typically a road in case of a land-bound vehicle) currently travelled by the vehicle. In the present example, the maximum allowable speed has been illustrated in Fig. 2 by a road sign 16 stating that the maximum allowable speed is 90 km/h. The vehicle may be provided with a camera 18 which may capture an image of the road sign and send it by means of a camera signal 20 to the control unit 10. In addition, or as an alternative, the vehicle may be equipped with a navigation system 22 which, based on the current position of the vehicle, may provide an input signal 24 to the control unit 10 (the input signal 24 revealing the maximum allowable speed). As will be explained in more detail later on, based on these different received signals, the control unit 10 may determine that the vehicle is driving above a selected value V1, which represents a speed below the maximum allowable speed. For instance, for a road having 90 km/h as the maximum allowable speed, V1 may be selected to be 80 km/h. The control unit 10 may also determine that the speed over a time period T is steady enough relative to the average speed during that time period, in which case the control unit 10 may send an activation signal 26 to activate the cruise control. The time period T may, for example be set as a certain number of seconds, but other units of time are also conceivable. The determination that the speed is steady enough relative to the average speed during the time period T may be checked with respect to a predefined allowable deviation stored in an electronic memory of (or accessible by) the control unit 10. The automatic activation of the cruise control will reduce oscillations and will reduce energy consumption. The actual electronic architecture for the cruise control may be included in the control unit 10 itself, or as illustrated in Fig. 2 may be embodied in a separate cruise control module 28. In connection with the automatic activation of the cruise control, the control unit 10 may suitably send an alert signal 30 to a user interface 32 for notifying the driver that the cruise control has been activated. This may be a sound, a visual notification, a tactile notification or any combination thereof.

As further illustrated in Fig. 2, the control unit 10 may receive a propulsion signal 34 based on the position of an accelerator pedal (from any suitable acceleration pedal sensor 36), and the control unit 10 may also receive a manual cruise control request signal 38 from a manually operated driver interface 40.

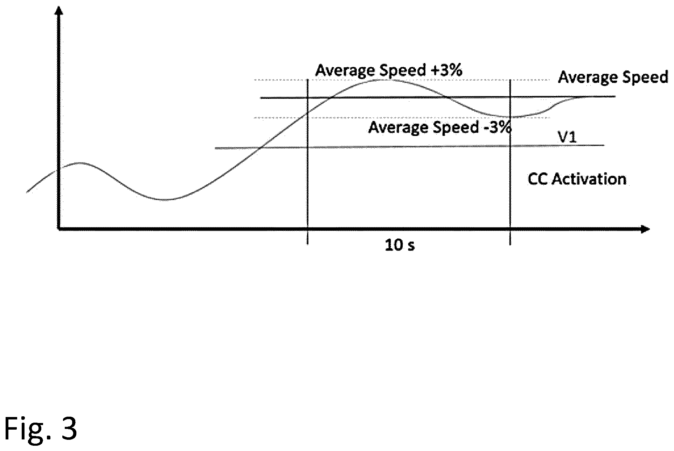

Fig. 3 is a graph which schematically illustrates the implementation of the method of the present invention according to at least one exemplary embodiment. The vertical axis represents the speed of the vehicle, while the horizontal axis represents time. In this example, it can be seen that after some time, the vehicle speed exceeds a selected value V1 for a limit speed. The value V1 is, in accordance with this invention, selected to be below the maximum allowable speed. The average speed is constantly determined by using the continuous speed measurements (e.g. using the speed sensor 14 in Fig. 2). In this example a time range T of 10 seconds has been selected for calculating the average speed. Thus, as soon as the vehicle has exceeded the speed V1, the average speed for the most recent 10 seconds is constantly calculated by the control unit. In Fig. 3, a 10 seconds time window is indicated in which the deviation from the average speed during that time window was no more than a predefined allowable deviation (in this example ± 3%). This triggers the automatic activation of the cruise control (indicated as "CC Activation" after the time window), and the vehicle is therefore set to operate at a cruise control speed which corresponds to the average speed of that time window. In other words, as soon as a time range or time window (of the defined T units of time, in this example 10 s) is found in which the average speed is higher than V1 and the deviation is within the predefined allowable deviation, that average speed will be the cruise control speed. It should thus be understood that the control unit may at any point in time look back at the most recent T units of time to determine if the criteria have been fulfilled. For instance, such time window sampling may be made each second or even at shorter intervals. Thus, in the illustrated example in Fig. 2, the control unit 10 will in practice have analysed a plurality of partly overlapping time windows.

It should be understood that the above exemplified allowable deviation is indeed just an example. Other numerical values are readily conceivable as desired. For instance, said predefined allowable deviation may, in a general sense, suitably be defined as a percentage of the calculated average speed, such as the calculated average speed ±x%, where x is a positive number, such as 0 < x < 10.0, suitably 1.0 < x < 6.0, for example 2.0 < x < 4.0.

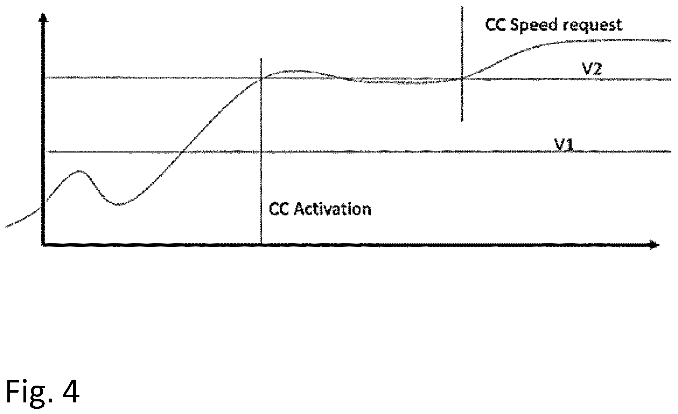

Fig. 4 is a graph which schematically illustrates the implementation of the method of the present invention according to at least another exemplary embodiment. In this graph the vehicle continues to accelerate beyond V1 until it reaches a value V2, which is an automatic activation limit. The value V2 is selected to be below the maximum allowable speed. For instance, if the maximum allowable speed is 90 km/h, then the value V2 may be selected to be 85 km/h. As illustrated in the graph as the vehicle has accelerated to V2, the cruise control may suitably be automatically activated ("CC Activation") at a speed corresponding to V2. Alternatively, it may be conceivable to allow a higher cruise control speed if the driver has accelerated up to an intermediate speed (for example, 87 km/h) which is higher than V2 but lower than or at most equal to the maximum allowable speed. In such an alternative, the cruise control speed may suitably be automatically set to said intermediate speed. As further illustrated in Fig. 4, after the cruise control has been automatically activated, a driver may decide to adjust the automatically set cruise control speed (such as via the manually operated driver interface 40 in Fig. 2). Thus, the driver may manually send a cruise control speed request ("CC Speed request") and the control unit may allow this as long as the desired adjusted speed does not exceed the maximum allowable speed.

Turning back to Fig. 2, when the cruise control has been activated by the control unit 10, either as in Fig. 3 (in relation to V1) or as in Fig. 4 (in relation to V2), the control unit 10 may still receive propulsion signals 34 from the accelerator pedal sensor 36. The propulsion signals 34 may be representative of a request for 0-100% of full load. The control unit 10 will in such case suitably ignore a propulsion signal 34 which is representative of a request for less than 100% of full load. On the other hand if the propulsion signal 34 is representative of a request for 100% of full load, then the control unit 10 may suitably deactivate the cruise control and allow the vehicle to accelerate (which may be appropriate when, for example, overtaking another vehicle).

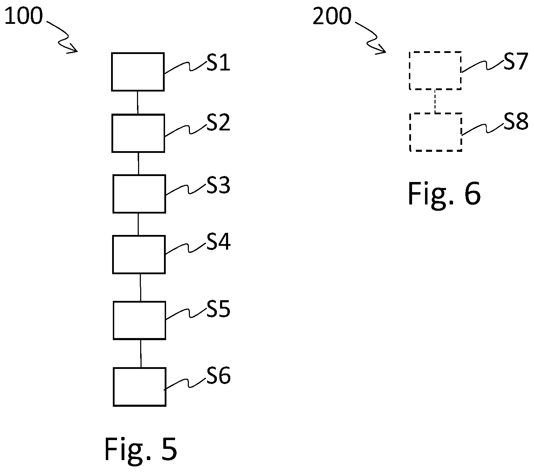

Fig. 5 schematically illustrates steps of a method 100 of the present invention, in accordance with at least one exemplary embodiment. More specifically, Fig. 5 schematically illustrates a method 100 of activating cruise control for a vehicle in motion, comprising:
- in a step S1, continuously acquiring measurements of the speed of the vehicle,
- in a step S2, determining a maximum allowable speed on the path currently travelled by the vehicle,
- in a step S3, selecting a value V1 for a limit speed based on the determined maximum allowable speed, said value V1 being lower than the maximum allowable speed,
- in a step S4, selecting a time range of T units of time, such as T seconds, wherein the value of T is selected based on the maximum allowable speed,
- in a step S5, continuously calculating the average speed of the vehicle, wherein said calculated average speed is, at any given moment, based on the continuously acquired speed measurements for the most recent T units of time,
- in a step S6, upon determination that the speed of the vehicle exceeds the value V1 and that during the most recent T units of time the speed has deviated less than or equal to a predefined allowable deviation from the last calculated average speed, automatically activating the cruise control to operate the vehicle at said last calculated average speed.

The steps do not necessarily need to be performed in the listed order. Some of the steps may be performed simultaneously or in a different order. For instance, steps S3 and S4 may be performed simultaneously or in any order.

Fig. 6 schematically illustrates a method 200 with some optional additional steps, in accordance with at least some other exemplary embodiments. Thus, the method 200 in Fig. 6 contains all the steps S1-S6 of the method in Fig. 5, but additionally contains two optional steps S7-S8. For instance, in some exemplary embodiments steps S7 and S8 may represent, when a section of the path travelled by the vehicle is reached where the maximum allowable speed is different from the previous maximum allowable speed:
- step S7: lowering the value V1 for said limit speed if the new maximum allowable speed is lower than the previous maximum allowable speed,
- step S8: raising the value V1 for said limit speed if the new maximum allowable speed is higher than the previous maximum allowable speed.

In at least some other exemplary embodiments steps S7 and S8 may represent, when a section of the path travelled by the vehicle is reached where the maximum allowable speed is different from the previous maximum allowable speed:
- step S7: reducing the value T if the new maximum allowable speed is higher than the previous maximum allowable speed,
- step S8: increasing the value T if the new maximum allowable speed is lower than the previous maximum allowable speed.

In at least some other exemplary embodiments steps S7 and S8 may represent:
- step S7: selecting a value V2 for an automatic activation speed based on the determined maximum allowable speed, wherein the value V2 is higher than the value V1 but lower than or equal to the maximum allowable speed, and
- step S8: upon determination that the speed of the vehicle has reached said value V2, automatically activating the cruise control to operate the vehicle at said speed V2.

In at least some other exemplary embodiments steps S7 and S8 may represent:
- step S7: selecting a value V2 for an automatic activation speed based on the determined maximum allowable speed, wherein the value V2 is higher than the value V1 but lower than or equal to the maximum allowable speed, and
- step S8: upon receipt of an acceleration request up to a speed above the value V2 but no higher than the maximum allowable speed, automatically activating the cruise control to operate the vehicle at said speed above the value V2.

In at least some other exemplary embodiments steps S7 and S8 may represent, when a section of the path travelled by the vehicle is reached where the maximum allowable speed is different from the previous maximum allowable speed:
- step S7: lowering the value V2 for said automatic activation speed if the new maximum allowable speed is lower than the previous maximum allowable speed,
- step S8: raising the value V2 for said automatic activation speed if the new maximum allowable speed is higher than the previous maximum allowable speed.

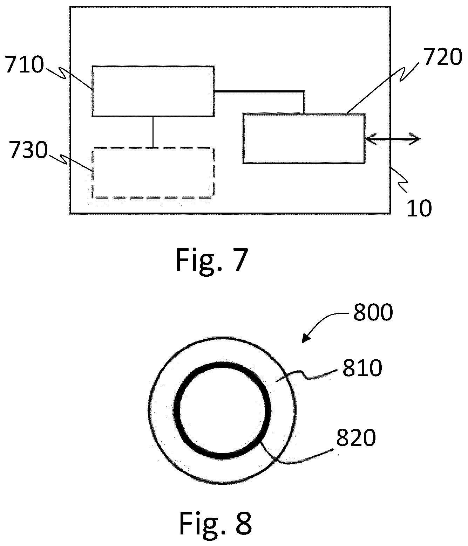

Fig. 7 schematically illustrates a control unit 10 according to at least one exemplary embodiment of the present invention. In particular, Fig. 7 illustrates, in terms of a number of functional units, the components of a control unit 10 according to exemplary embodiments of the discussions herein. The control unit 10 may be comprised in any vehicle disclosed herein, such as the one illustrated in Fig. 1, and others discussed above. Processing circuitry 710 may be provided using any combination of one or more of a suitable central processing unit CPU, multiprocessor, microcontroller, digital signal processor DSP, etc., capable of executing software instructions stored in a computer program product, e.g. in the form of a storage medium 730. The processing circuitry 710 may further be provided as at least one application specific integrated circuit ASIC, or field programmable gate array FPGA.

Particularly, the processing circuitry 710 is configured to cause the control unit 10 to perform a set of operations, or steps, such as the method discussed in connection to Figs. 5 and 6, and exemplary embodiments thereof discussed throughout this disclosure. For example, the storage medium 730 may store the set of operations, and the processing circuitry 710 may be configured to retrieve the set of operations from the storage medium 730 to cause the control unit 10 to perform the set of operations. The set of operations may be provided as a set of executable instructions. Thus, the processing circuitry 710 is thereby arranged to execute exemplary methods as herein disclosed.

The storage medium 730 may also comprise persistent storage, which, for example may be any single one or combination of magnetic memory, optical memory, solid state memory or even remotely mounted memory.

The control unit 10 may further comprise an interface 720 for communications with at least one external device such as the speed sensor 14, the camera 18, the navigation system 22, the control module 28, the user interface 32, the acceleration pedal sensor 36 and the driver interface 40 discussed herein. As such, the interface 720 may comprise one or more transmitters and receivers, comprising analogue and digital components and a suitable number of ports for wireline or wireless communication.

The processing circuitry 710 controls the general operation of the control unit 10, e.g. by sending data and control signals to the interface 720 and the storage medium 730, by receiving data and reports from the interface 720, and by retrieving data and instructions form the storage medium 730. Other components, as well as the related functionality, of the control unit 10 are omitted in order not to obscure the concepts presented herein.

Fig. 8 schematically illustrates a computer program product 800 according to at least one exemplary embodiment of the present invention. More specifically, Fig. 8 illustrates a computer readable medium 810 carrying a computer program comprising program code means 820 for performing the methods exemplified in Figs. 5 and 6, when said program product is run on a computer. The computer readable medium 810 and the program code means 820 may together form the computer program product 800.

## Claims

1. A method (100, 200) of activating cruise control for a vehicle (1) in motion, comprising:
- continuously acquiring (S1) measurements of the speed of the vehicle,
- determining (S2) a maximum allowable speed on the path currently travelled by the vehicle,
- selecting (S3) a value V1 for a limit speed based on the determined maximum allowable speed, said value V1 being lower than the maximum allowable speed,
- selecting (S4) a time range of T units of time, such as T seconds, wherein the value of T is selected based on the maximum allowable speed,
- continuously calculating (S5) the average speed of the vehicle, wherein said calculated average speed is, at any given moment, based on the continuously acquired speed measurements for the most recent T units of time,
- upon determination that the speed of the vehicle exceeds the value V1 and that during the most recent T units of time the speed has deviated less than or equal to a predefined allowable deviation from the last calculated average speed, automatically activating (S6) the cruise control to operate the vehicle at said last calculated average speed.

2. The method (100, 200) according to claim 1, wherein a further criterion for said step of automatically activating the cruise control is that the speed of the vehicle during said most recent T units of time has remained higher than or equal to said value V1.

3. The method (200) according to any one of claims 1-2, wherein, when a section of the path travelled by the vehicle is reached where the maximum allowable speed is different from the previous maximum allowable speed, the method further comprises:
- lowering (S7) the value V1 for said limit speed if the new maximum allowable speed is lower than the previous maximum allowable speed,
- raising (S8) the value V1 for said limit speed if the new maximum allowable speed is higher than the previous maximum allowable speed.

4. The method (200) according to any one of claims 1-3, wherein when a section of the path travelled by the vehicle is reached where the maximum allowable speed is different from the previous maximum allowable speed, the method further comprises:
- reducing (S7) the value T if the new maximum allowable speed is higher than the previous maximum allowable speed,
- increasing (S8) the value T if the new maximum allowable speed is lower than the previous maximum allowable speed.

5. The method (200) according to any one of claims 1-4, comprising:
- selecting (S7) a value V2 for an automatic activation speed based on the determined maximum allowable speed, wherein the value V2 is higher than the value V1 but lower than or equal to the maximum allowable speed, and
- upon determination that the speed of the vehicle has reached said value V2, automatically activating (S8) the cruise control to operate the vehicle at said speed V2.

6. The method (200) according to any one of claims 1-4, comprising,
- selecting (S7) a value V2 for an automatic activation speed based on the determined maximum allowable speed, wherein the value V2 is higher than the value V1 but lower than or equal to the maximum allowable speed, and
- upon receipt of an acceleration request up to a speed above the value V2 but no higher than the maximum allowable speed, automatically activating (S8) the cruise control to operate the vehicle at said speed above the value V2.

7. The method (200) according to any one of claims 5-6, wherein when a section of the path travelled by the vehicle is reached where the maximum allowable speed is different from the previous maximum allowable speed, the method further comprises:
- lowering (S7) the value V2 for said automatic activation speed if the new maximum allowable speed is lower than the previous maximum allowable speed,
- raising (S8) the value V2 for said automatic activation speed if the new maximum allowable speed is higher than the previous maximum allowable speed.

8. The method (100, 200) according to any one of claims 1-7, wherein said predefined allowable deviation is defined as a percentage of the calculated average speed, such as the calculated average speed ±x%, where x is a positive number, such as 0 < x < 10.0, suitably 1.0 < x < 6.0, for example 2.0 < x < 4.0.

9. The method (100, 200) according to any one of claims 1-8, comprising, when the cruise control is activated and the speed of the vehicle is at least equal to V1:
- receiving from an accelerator pedal sensor (36) a propulsion signal (34) representative of a request for 0-100% of full load, wherein the method further comprises:
- ignoring a propulsion signal representative of a request for less than 100% of full load,
- deactivating the cruise control upon receipt of propulsion signal representative of a request for 100% of full load.

10. The method (100, 200) according to any one of claims 1-9, further comprising, when cruise control is activated:
- upon receipt of a driver-initiated request (38) for changing the current cruise control speed to a requested cruise control speed which is equal to or below the maximum allowable speed, changing the current cruise control speed to said requested cruise control speed.

11. The method (100, 200) according to any one of claims 1-10, further comprising, in connection with said automatic activation of the cruise control:
- sending an alert signal (30) to a user interface (32) for notifying the driver that the cruise control has been activated.

12. The method (100, 200) according to any one of claims 1-11, wherein said step of continuously acquiring measurements of the speed of the vehicle comprises receiving speed signals (12) from a speed sensor (14) of the vehicle.

13. The method (100, 200) according to any one of claims 1-12, wherein said step of determining the maximum allowable speed comprises:
- receiving from a camera (18) of the vehicle an image of a road sign, and determining the maximum allowable speed based on the received image, and/or
- receiving information of the maximum allowable speed from a navigation system (22) of the vehicle.

14. A computer program comprising program code means (820) for performing the steps of the method (100, 200) according to any one of claims 1-13, when said program is run on a computer.

15. A computer readable medium (810) carrying a computer program comprising program code means (820) for performing the steps of the method (100, 200) according to any one of claims 1-13 when said program product is run on a computer.

16. A control unit (10) for controlling cruise control for a vehicle (1) in motion, the control unit being configured to perform the steps of the method (100, 200) according to any one of claims 1-13.

17. A vehicle (1), such as a heavy-duty vehicle, comprising a control unit (10) according to claim 16.

## Patentansprüche

1. Verfahren (100, 200) zum Aktivieren einer Geschwindigkeitsregelung für ein Fahrzeug (1) in Bewegung, umfassend:
- kontinuierliches Erfassen (S1) von Messungen der Geschwindigkeit des Fahrzeugs,
- Bestimmen (S2) einer maximal zulässigen Geschwindigkeit auf dem Weg, auf dem das Fahrzeug aktuell fährt,
- Auswählen (S3) eines Werts V1 für eine Grenzgeschwindigkeit basierend auf der bestimmten maximal zulässigen Geschwindigkeit, wobei der Wert V1 niedriger ist als die maximal zulässige Geschwindigkeit,
- Auswählen (S4) eines Zeitbereichs von T Zeiteinheiten, wie zum Beispiel T Sekunden, wobei der Wert von T basierend auf der maximal zulässigen Geschwindigkeit ausgewählt wird,
- kontinuierliches Berechnen (S5) der Durchschnittsgeschwindigkeit des Fahrzeugs, wobei die berechnete Durchschnittsgeschwindigkeit jederzeit auf den kontinuierlich erfassten Geschwindigkeitsmessungen für die neuesten T Zeiteinheiten basiert,
- bei Bestimmung, dass die Geschwindigkeit des Fahrzeugs den Wert V1 überschreitet und dass während der neuesten T Zeiteinheiten die Geschwindigkeit um weniger als oder gleich einer vordefinierten zulässigen Abweichung von der letzten berechneten Durchschnittsgeschwindigkeit abgewichen ist, automatisches Aktivieren (S6) der Geschwindigkeitsregelung zum Betreiben des Fahrzeugs mit der letzten berechneten Durchschnittsgeschwindigkeit.

2. Verfahren (100, 200) nach Anspruch 1, wobei ein weiteres Kriterium für den Schritt des automatischen Aktivierens der Geschwindigkeitsregelung ist, dass die Geschwindigkeit des Fahrzeugs während der neuesten T Zeiteinheiten höher oder gleich dem Wert V1 geblieben ist.

3. Verfahren (200) nach einem der Ansprüche 1-2, wobei, wenn ein Abschnitt des Wegs, den das Fahrzeug fährt, erreicht wird, bei dem sich die maximal zulässige Geschwindigkeit von der vorherigen maximal zulässigen Geschwindigkeit unterscheidet, das Verfahren ferner Folgendes umfasst:
- Verringern (S7) des Werts V1 für die Grenzgeschwindigkeit, wenn die neue maximal zulässige Geschwindigkeit niedriger ist als die vorherige maximal zulässige Geschwindigkeit,
- Steigern (S8) des Werts V1 für die Grenzgeschwindigkeit, wenn die neue maximal zulässige Geschwindigkeit höher ist als die vorherige maximal zulässige Geschwindigkeit.

4. Verfahren (200) nach einem der Ansprüche 1-3, wobei, wenn ein Abschnitt des Wegs, den das Fahrzeug fährt, erreicht wird, bei dem sich die maximal zulässige Geschwindigkeit von der vorherigen maximal zulässigen Geschwindigkeit unterscheidet, das Verfahren ferner Folgendes umfasst:
- Reduzieren (S7) des Werts T, wenn die neue maximal zulässige Geschwindigkeit höher ist als die vorherige maximal zulässige Geschwindigkeit,
- Erhöhen (S8) des Werts T, wenn die neue maximal zulässige Geschwindigkeit niedriger ist als die vorherige maximal zulässige Geschwindigkeit.

5. Verfahren (200) nach einem der Ansprüche 1-4, umfassend:
- Auswählen (S7) eines Werts V2 für eine automatische Aktivierungsgeschwindigkeit basierend auf der bestimmten maximal zulässigen Geschwindigkeit, wobei der Wert V2 höher ist als der Wert V1, aber niedriger als oder gleich der maximal zulässigen Geschwindigkeit, und
- bei Bestimmung, dass die Geschwindigkeit des Fahrzeugs den Wert V2 erreicht hat, automatisches Aktivieren (S8) der Geschwindigkeitsregelung zum Betreiben des Fahrzeugs mit der Geschwindigkeit V2.

6. Verfahren (200) nach einem der Ansprüche 1-4, umfassend:
- Auswählen (S7) eines Werts V2 für eine automatische Aktivierungsgeschwindigkeit basierend auf der bestimmten maximal zulässigen Geschwindigkeit, wobei der Wert V2 höher ist als der Wert V1, aber niedriger als oder gleich der maximal zulässigen Geschwindigkeit, und
- bei Empfang einer Beschleunigungsanforderung bis zu einer Geschwindigkeit über dem Wert V2 aber nicht höher als die maximal zulässige Geschwindigkeit, automatisches Aktivieren (S8) der Geschwindigkeitsregelung zum Betreiben des Fahrzeugs mit der Geschwindigkeit über dem Wert V2.

7. Verfahren (200) nach einem der Ansprüche 5-6, wobei, wenn ein Abschnitt des Wegs, den das Fahrzeug fährt, erreicht wird, bei dem sich die maximal zulässige Geschwindigkeit von der vorherigen maximal zulässigen Geschwindigkeit unterscheidet, das Verfahren ferner Folgendes umfasst:
- Verringern (S7) des Werts V2 für die automatische Aktivierungsgeschwindigkeit, wenn die neue maximal zulässige Geschwindigkeit niedriger ist als die vorherige maximal zulässige Geschwindigkeit,
- Steigern (S8) des Werts V2 für die automatische Aktivierungsgeschwindigkeit, wenn die neue maximal zulässige Geschwindigkeit höher ist als die vorherige maximal zulässige Geschwindigkeit.

8. Verfahren (100, 200) nach einem der Ansprüche 1-7, wobei die vordefinierte zulässige Abweichung definiert ist als Prozentsatz der berechneten Durchschnittsgeschwindigkeit, zum Beispiel die berechnete Durchschnittsgeschwindigkeit ±x %, wobei x eine positive Zahl ist, zum Beispiel 0 < x < 10,0, zweckmäßigerweise 1,0 < x < 6,0, zum Beispiel 2,0 < x < 4,0.

9. Verfahren (100, 200) nach einem der Ansprüche 1-8, umfassend, wenn die Geschwindigkeitsregelung aktiviert und die Geschwindigkeit des Fahrzeugs mindestens gleich V1 ist:
- Empfangen, von einem Gaspedalsensor (36), eines Antriebssignals (34), das einer Anforderung für 0-100 % der Volllast entspricht, wobei das Verfahren ferner Folgendes umfasst:
- Ignorieren eines Antriebssignals, das einer Anforderung für weniger als 100 % der Volllast entspricht,
- Deaktivieren der Geschwindigkeitsregelung bei Empfang eines Antriebssignals, das einer Anforderung für 100 % der Volllast entspricht.

10. Verfahren (100, 200) nach einem der Ansprüche 1-9 ferner umfassend, wenn die Geschwindigkeitsregelung aktiviert ist:
- bei Empfang einer fahrerinitiierten Anforderung (38) zum Ändern der aktuellen Geschwindigkeitsregelungsgeschwindigkeit auf eine angeforderte Geschwindigkeitsregelungsgeschwindigkeit, die gleich oder kleiner der maximal zulässigen Geschwindigkeit ist, Ändern der aktuellen Geschwindigkeitsregelungsgeschwindigkeit auf die angeforderte Geschwindigkeitsregelungsgeschwindigkeit.

11. Verfahren (100, 200) nach einem der Ansprüche 1-10, ferner umfassend, in Verbindung mit der automatischen Aktivierung der Geschwindigkeitsregelung:
- Senden eines Alarmsignals (30) an eine Benutzeroberfläche (32) zum Benachrichtigen des Fahrers, dass die Geschwindigkeitsregelung aktiviert wurde.

12. Verfahren (100, 200) nach einem der Ansprüche 1-11, wobei der Schritt des kontinuierlichen Erfassens von Messungen der Geschwindigkeit des Fahrzeugs Empfangen von Geschwindigkeitssignalen (12) von einem Geschwindigkeitssensor (14) des Fahrzeugs umfasst.

13. Verfahren (100, 200) nach einem der Ansprüche 1-12, wobei der Schritt des Bestimmens der maximal zulässigen Geschwindigkeit Folgendes umfasst:
- Empfangen, von einer Kamera (18) des Fahrzeugs, eines Bildes eines Straßenschildes und Bestimmen der maximal zulässigen Geschwindigkeit basierend auf dem empfangenen Bild und/oder
- Empfangen von Informationen zu der maximal zulässigen Geschwindigkeit von einem Navigationssystem (22) des Fahrzeugs.

14. Computerprogramm umfassend Programmcode-Mittel (820) zum Durchführen der Schritte des Verfahrens (100, 200) nach einem der Ansprüche 1-13, wobei das Programm auf einem Computer ausgeführt wird.

15. Computerlesbares Medium (810), das ein Computerprogramm enthält, welches Programmcode-Mittel (820) zum Durchführen der Schritte des Verfahrens (100, 200) nach einem der Ansprüche 1-13 umfasst, wobei das Programmprodukt auf einem Computer ausgeführt wird.

16. Steuereinheit (10) zum Steuern einer Geschwindigkeitsregelung für ein Fahrzeug (1) in Bewegung, wobei die Steuereinheit dazu konfiguriert ist, die Schritte des Verfahrens (100, 200) nach einem der Ansprüche 1-13 durchzuführen.

17. Fahrzeug (1), zum Beispiel ein Schwerlastfahrzeug, umfassend eine Steuereinheit (10) nach Anspruch 16.

## Revendications

1. Procédé (100, 200) **d'activation** de régulateur de vitesse d'un véhicule (1) en mouvement, comprenant :
- l'acquisition continue (S1) de mesures de la vitesse du véhicule ;
- la détermination (S2) d'une vitesse maximale autorisée sur le trajet actuellement parcouru par le véhicule ;
- la sélection (S3) d'une valeur V1 pour une limite de vitesse basée sur la vitesse maximale autorisée déterminée, ladite valeur V1 étant inférieure à la vitesse maximale autorisée ;
- la sélection (S4) d'une plage de temps de T unités de temps, telle que T secondes, la valeur de T étant sélectionnée en fonction de la vitesse maximale autorisée ;
- le calcul continu (S5) de la vitesse moyenne du véhicule, dans ladite vitesse moyenne calculée étant, à tout instant, basé sur les mesures de vitesse acquises en continu pour les unités de temps les plus récentes T ;
- lors de la détermination que la vitesse du véhicule dépasse la valeur V1 et que lors des unités de temps les plus récentes T, la vitesse a dévié de manière inférieure ou égale à une déviation autorisée prédéfinie par rapport à la dernière vitesse moyenne calculée, l'activation automatique (S6) du régulateur de vitesse pour faire fonctionner le véhicule à la dernière vitesse moyenne calculée.

2. Procédé (100, 200) selon la revendication 1, dans lequel un critère supplémentaire pour ladite étape d'activation automatique du régulateur de vitesse est que la vitesse du véhicule lors desdites unités de temps les plus récentes T est demeurée supérieure ou égale à ladite valeur V1.

3. Procédé (200) selon l'une quelconque des revendications 1 à 2, dans lequel, lorsqu'une section du trajet parcouru par le véhicule est atteinte où la vitesse maximale autorisée est différente de la vitesse maximale autorisée précédente, le procédé comprend en outre :
- la réduction (S7) de la valeur V1 de ladite vitesse limite si la nouvelle vitesse maximale autorisée est inférieure à la vitesse maximale autorisée précédente ;
- l'augmentation (S8) de la valeur V1 de ladite vitesse limite si la nouvelle vitesse maximale autorisée est supérieure à la vitesse maximale autorisée précédente.

4. Procédé (200) selon l'une quelconque des revendications 1 à 3, dans lequel, lorsqu'une section du trajet parcouru par le véhicule est atteinte où la vitesse maximale autorisée est différente de la vitesse maximale autorisée précédente, le procédé comprend en outre :
- la réduction (S7) de la valeur T si la nouvelle vitesse maximale autorisée est supérieure à la vitesse maximale autorisée précédente ;
- l'augmentation (S8) de la valeur T si la nouvelle vitesse maximale autorisée est inférieure à la vitesse maximale autorisée précédente.

5. Procédé (200) selon l'une quelconque des revendications 1 à 4, comprenant :
- la sélection (S7) d'une valeur V2 pour une vitesse d'activation automatique basée sur la vitesse maximale autorisée déterminée, la valeur V2 étant supérieure à la valeur V1 mais inférieure ou égale à la vitesse maximale autorisée ; et
- lors de la détermination que la vitesse du véhicule a atteint la valeur indiquée V2, l'activation automatique (S8) du régulateur de vitesse pour faire fonctionner le véhicule à la vitesse indiquée V2.

6. Procédé (200) selon l'une quelconque des revendications 1 à 4, comprenant,
- la sélection (S7) d'une valeur V2 pour une vitesse d'activation automatique sur la base de la vitesse maximale autorisée déterminée, dans lequel la valeur V2 est supérieure à la valeur V1 mais inférieure ou égale à la vitesse maximale autorisée, et
- lors de la réception d'une demande d'accélération jusqu'à une vitesse supérieure à la valeur V2 mais pas supérieure à la vitesse maximale autorisée, l'activation automatique (S8) du régulateur de vitesse pour faire fonctionner le véhicule à ladite vitesse supérieure à la valeur V2.

7. Procédé (200) selon l'une quelconque des revendications 5 à 6, dans lequel, lorsqu'une section du trajet parcouru par le véhicule est atteinte où la vitesse maximale autorisée est différente de la vitesse maximale autorisée précédente, le procédé comprend en outre :
- la réduction (S7) de la valeur V2 de ladite vitesse d'activation automatique si la nouvelle vitesse maximale autorisée est inférieure à la vitesse maximale autorisée précédente ;
- l'augmentation (S8) de la valeur V2 de ladite vitesse d'activation automatique si la nouvelle vitesse maximale autorisée est supérieure à la vitesse maximale autorisée précédente.

8. Procédé (100, 200) selon l'une quelconque des revendications 1 à 7, dans lequel ladite déviation autorisée prédéfinie est définie comme un pourcentage de la vitesse moyenne calculée, tel que la vitesse moyenne calculée ±x%, où x est un nombre positif, tel que 0 < x < 10,0, idéalement 1,0 < x < 6,0, par exemple 2,0 < x < 4,0.

9. Procédé (100, 200) selon l'une quelconque des revendications 1 à 8, comprenant, lorsque le régulateur de vitesse est activé et que la vitesse du véhicule est au moins égale à V1 :
- la réception, depuis un capteur de pédale d'accélérateur (36), d'un signal de propulsion (34) représentatif d'une demande de 0 à 100 % de pleine charge, le procédé comprenant en outre :
- l'ignorance d'un signal de propulsion représentatif d'une demande de moins de 100 % de pleine charge,
- la désactivation du régulateur de vitesse à la réception d'un signal de propulsion représentatif d'une demande de 100 % de pleine charge.

10. Procédé (100, 200) selon l'une quelconque des revendications 1 à 9, comprenant en outre, lorsque le régulateur de vitesse est activé :
- lors de la réception d'une demande du conducteur (38) pour modifier la vitesse de régulateur de vitesse actuelle à une vitesse de régulateur de vitesse demandée égale ou inférieure à la vitesse maximale autorisée, la modification de la vitesse de régulateur de vitesse actuelle à ladite vitesse de régulateur de vitesse demandée.

11. Procédé (100, 200) selon l'une quelconque des revendications 1 à 10, comprenant en outre, en relation avec l'activation automatique du régulateur de vitesse :
- l'envoi d'un signal d'alerte (30) à une interface utilisateur (32) pour informer le conducteur de l'activation du régulateur de vitesse.

12. Procédé (100, 200) selon l'une quelconque des revendications 1 à 11, dans lequel l'étape d'acquisition continue de mesures de la vitesse du véhicule comprend la réception de signaux de vitesse (12) provenant d'un capteur de vitesse (14) du véhicule.

13. Procédé (100, 200) selon l'une quelconque des revendications 1 à 12, dans lequel ladite étape de détermination de la vitesse maximale autorisée comprend :
- la réception, depuis une caméra (18) du véhicule, d'une image d'un panneau de signalisation, et la détermination de la vitesse maximale autorisée sur la base de l'image reçue, et/ou
- la réception d'informations sur la vitesse maximale autorisée depuis un système de navigation (22) du véhicule.

14. Programme informatique comprenant un code de programme (820) permettant de mettre en œuvre les étapes du procédé (100, 200) selon l'une quelconque des revendications 1 à 13, lorsque ledit programme est exécuté sur un ordinateur.

15. Support lisible par ordinateur (810) portant un programme informatique comprenant un code de programme (820) permettant de mettre en œuvre les étapes du procédé (100, 200) selon l'une quelconque des revendications 1 à 13, lorsque ledit programme est exécuté sur un ordinateur.

16. Unité de commande (10) pour la commande du régulateur de vitesse d'un véhicule (1) en mouvement, l'unité de commande étant configurée pour mettre en œuvre les étapes du procédé (100, 200) selon l'une quelconque des revendications 1 à 13.

17. Véhicule (1), tel qu'un véhicule lourd, comprenant une unité de commande (10) selon la revendication 16.
